# EUROPEAN PATENT APPLICATION

(11) **EP 4 791 098 A1**
(43) Date of publication of application: **12.08.2026**
(21) Application number: 23954804.3
(22) Date of filing: 05.10.2023
(51) Int. Cl.: H04W 72/0446, H04W 72/20, H04W 72/044

(54) **TERMINAL AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); NAGATA, Satoshi, Tokyo 100-6150 (JP); PI, Qiping, Beijing, 100190 (CN); WANG, Jing, Beijing, 100190 (CN); HOU, Xiaolin, Beijing, 100190 (CN); LIU, Wenjia, Beijing, 100190 (CN); CHEN, Lan, Beijing, 100190 (CN)
(74) Representative: Hoffmann Eitle
(86) International application number: PCT/JP2023/036442
(87) International publication number: WO 2025/074595

(57) **Abstract**

A terminal includes: a control unit configured to expect that scheduling of a shared channel is to be performed by using a level of a block composed of a plurality of symbols or a plurality of slots in communications to which a subcarrier spacing greater than a certain frequency is applied; and a communication unit configured to receive the shared channel from a base station or transmit the shared channel to the base station in the communications.

## Description

### TECHNICAL FIELD

The present invention relates to a terminal and a communication method in a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Literature 1 and Non-Patent Literature 2).

In addition, various requirements for the next generation "6G" are being discussed. For example, the requirements include ultra broadband communication, mission critical communication, ultra massive connection, universal coverage, intelligent connection, ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

### CITATION LIST

### Non-Patent Literature

Non-Patent Literature 1: 3GPP TS 38.300 V17.5.0 (2023-06)
Non-Patent Literature 2: 3GPP TS 38.401 V17.5.0 (2023-06)
Non-Patent Literature 3: 3GPP TS 38.213 V17.6.0 (2023-06)
Non-Patent Literature 4: 3GPP TS 38.331 V17.5.0 (2023-06)
Non-Patent Literature 5: 3GPP TS 38.214 V17.6.0 (2023-06)
Non-Patent Literature 6: 3GPP TS 38.211 V17.5.0 (2023-06)

### SUMMARY OF INVENTION

### TECHNICAL PROBLEM

For example, in a frequency band in which frequencies higher than the conventional frequencies are used, a larger subcarrier spacing is used. With the larger subcarrier spacing, the symbol length and the slot length become shorter, and thus, the channel or signal structure needs to be appropriate for the subcarrier spacing.

The present invention has been made in view of the above points, and it is an object of the present invention to transmit and receive a channel or signal to which the larger subcarrier spacing is applied in the wireless communication system.

### SOLUTION TO PROBLEM

According to the disclosed technique, a terminal is provided. The terminal includes: a control unit configured to expect that scheduling of a shared channel is to be performed by using a level of a block composed of a plurality of symbols or a plurality of slots in communications to which a subcarrier spacing greater than a certain frequency is applied; and a communication unit configured to receive the shared channel from a base station or transmit the shared channel to the base station in the communications.

### ADVANTAGEOUS EFFECTS OF INVENTION

According to the disclosed technique, a channel or signal to which a larger subcarrier spacing is applied can be transmitted and received in the wireless communication system.

### BRIEF DESCRIPTION OF DRAWINGS

[Fig. 1] is a drawing illustrating a configuration example of a wireless communication system in an embodiment of the present invention.
[Fig. 2] is a drawing illustrating an example (1) of PDCCH monitoring in an embodiment of the present invention.
[Fig. 3] is a drawing illustrating an example (1) of multi-PDSCH scheduling in an embodiment of the present invention.
[Fig. 4] is a drawing illustrating an example of TBoMS in an embodiment of the present invention.
[Fig. 5] is a drawing illustrating an example of multi-PDSCH/PUSCH scheduling in an embodiment of the present invention.
[Fig. 6] is a drawing illustrating an example of time domain resource allocation in an embodiment of the present invention.
[Fig. 7] is a drawing illustrating an example (1) of per block time domain resource allocation in an embodiment of the present invention.
[Fig. 8] is a drawing illustrating an example (2) of per block time domain resource allocation in an embodiment of the present invention.
[Fig. 9] is a drawing illustrating an example without frequency hopping in an embodiment of the present invention.
[Fig. 10] is a drawing illustrating an example (1) of frequency hopping in an embodiment of the present invention.
[Fig. 11] is a drawing illustrating an example (2) of frequency hopping in an embodiment of the present invention.
[Fig. 12] is a drawing illustrating an example (3) of frequency hopping in an embodiment of the present invention.
[Fig. 13] is a drawing illustrating an example (4) of frequency hopping in an embodiment of the present invention.
[Fig. 14] is a drawing illustrating an example (5) of frequency hopping in an embodiment of the present invention.
[Fig. 15] is a drawing illustrating an example (1) of DMRS arrangement in an embodiment of the present invention.
[Fig. 16] is a drawing illustrating an example (2) of DMRS arrangement in an embodiment of the present invention.
[Fig. 17] is a drawing illustrating an example (3) of DMRS arrangement in an embodiment of the present invention.
[Fig. 18] is a drawing illustrating an example (4) of DMRS arrangement in an embodiment of the present invention.
[Fig. 19] is a drawing illustrating an example of TBoMS in an embodiment of the present invention.
[Fig. 20] is a drawing illustrating an example of a functional structure of a base station 10 in an embodiment of the present invention.
[Fig. 21] is a drawing illustrating an example of a functional configuration of a terminal 20 in an embodiment of the present invention.
[Fig. 22] is a drawing illustrating an example of a hardware structure of the base station 10 or the terminal 20 in an embodiment of the present invention.
[Fig. 23] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

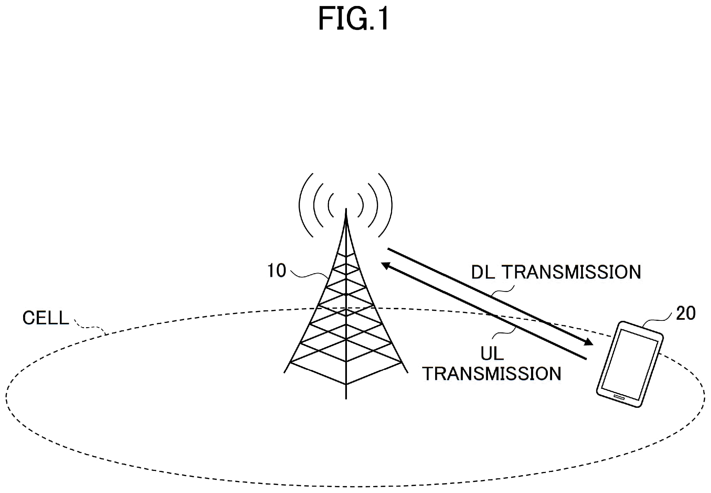

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, various requirements for the next generation "6G" are being discussed. For example, the requirements include the ultra broadband communication, the mission critical communication, the ultra massive connection, the universal coverage, the intelligent connection, the ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

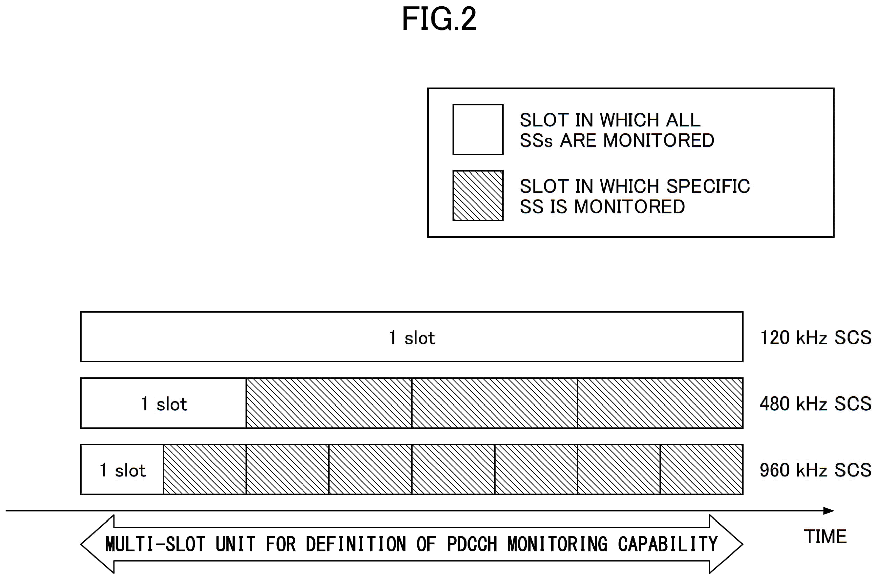

Fig. 2 is a drawing illustrating an example of PDCCH monitoring in an embodiment of the present invention. In an example illustrated in Fig. 2, all of the PDCCH search spaces (SSs) may be monitored during the time length as long as one slot in a case of 120 kHz SCS, as long as one slot out of four slots in a case of 480 kHz SCS, and as long as one slot out of eight slots in a case of 960 kHz SCS. It is to be noted that only a specific search space may be monitored during the three slots other than the above-described one slot in a case of 480 kHz SCS, and during the seven slots other than the above-described one slot in a case 960 kHz SCS.

Table 1 shows the maximum number of monitored PDCCH candidates in a group of Xₛ slots per combination (Xₛ,Yₛ) and per serving cell (refer to Non-Patent Literature 3). It is to be noted that Yₛ indicates slots for which all of the search spaces are monitoring target.

**[Table 1]**

| | **Maximum number** ${M}_{PDCCH}^{max , {X}_{s} , μ}$ **of monitored PDCCH candidates in a group of X*ₛ* slots per combination (*Xₛ,Yₛ*) and per serving cell** | | | |
|---|---|---|---|---|
| ***µ*** | (4, 1) | (4, 2) | (8, 1) | (8, 4) |
| 5 | 20 | 20 | - | - |
| 6 | 10 | 10 | 20 | 20 |

Table 2 shows the maximum number of non-overlapped CCEs (Control Channel Elements) in a group of Xₛ slots per combination (Xₛ, Yₛ) and per serving cell (refer to Non-Patent Literature 3).

**[Table 2]**

| | **Maximum number of non-overlapped CCEs in a group of X*ₛ* slots per combination (*Xₛ,Yₛ*) and per serving cell** ${C}_{PDCCH}^{max , {X}_{s} , μ}$ | | | |
|---|---|---|---|---|
| ***µ*** | (4, 1) | (4, 2) | (8, 1) | (8, 4) |
| 5 | 32 | 32 | - | - |
| 6 | 16 | 16 | 32 | 32 |

Configuration of 480 kHz SCS, that is µ = 5, and (Xₛ, Yₛ) = (4, 1) and configuration of 960 kHz SCS, that is µ = 6, and (Xₛ Yₛ) =(8, 1) in Table 1 and Table 2 correspound to Fig. 2. According to the above-described configurations, the same number of PDCCH candidates 20 and the same number of non-overlapped CCEs 32 are configured in one slot for 120 kHz SCS, in four slots for 480 kHz SCS and in eight slots for 960 kHz SCS.

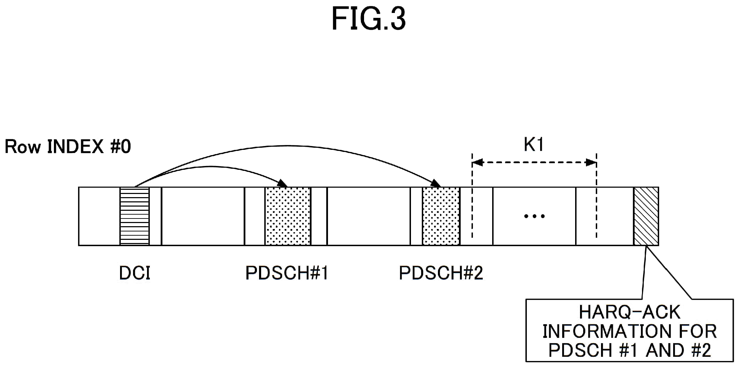

Fig. 3 is a drawing illustrating an example of multi-PDSCH scheduling in an embodiment of the present invention. Table 3 is an example of a TDRA (Time domain resource allocation) table. The TDRA table in Table 3 supports multi-PDSCH scheduling.

| Row index | K0 | SLIV | Mapping type |
|---|---|---|---|
| 0 | {2,4} | S={0,0}, L ={12,14} | {A,A} |
| 1 | {1,2,3} | S={0,4,0}, L ={14,10,14} | {A,B,A} |
| ...... | ...... | ...... | ...... |

For example, as illustrated in Fig. 3, the row index 0 in Table 3 can schedule a twelve-symbol length of PDSCH#1 with an offset 2 and a starting symbol #0 and a fourteen-symbol length of PDSCH#2 with an offset 4 and a starting symbol #0. Furthermore, HARQ-ACK information corresponding to PDSCH#1 and PDSCH#2 is transmitted after an offset K1 from PDSCH#2.

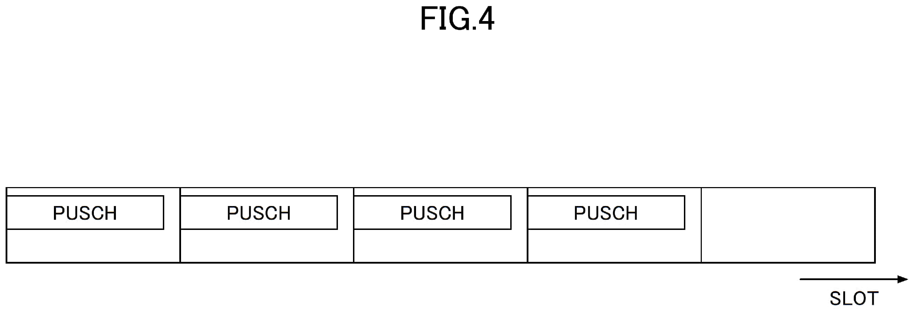

Fig. 4 is drawing illustrating an example of TBoMS in an embodiment of the present invention. In the time resource allocation of TBoMS (Transport Block proccesing over Multiple Slots), one transport block is arranged across a plurality of slots. Fig. 4 is an example of one transport block being arranged across four slots. The number N of slots in which one transport block is arranged is indicated by the base station 10 by using an information element numberOfSlotsTBoMS. In TBoMS, the symbol arrangement in each of the slots may be the same.

Here, there is a possibility that the SCS greater than 960 kHz will be used for a frequency band greater than 71 GHz. The symbol length and the slot length become even shorter with the larger SCS. The terminal 20 or the base station 10 may perform operations described in the following 1) to 4) by taking into account the even shorter symbol length and slot length.
1) Which channel or signal is to be a channel or signal to which the even higher SCS is applied may be determined. For example, which one of SSB, PDCCH, PDSCH, PUSCH, and PUCCH is to be a channel or signal to which the even higher SCS is applied may be determined.
2) The capability of monitoring PDCCH to which the even higher SCS is applied may be enabled to be relaxed. For example, the per multi-slot PDCCH monitoring capability and the number of slots in one slot may be increased.
3) With respect to the scheduling of PDSCH and/or PUSCH to which the even higher SCS is applied, the greater number of PDSCHs and/or PUSCHs may be scheduled by single DCI. The granularity of scheduling of PDSCHs and/or PUSCHs may be increased. For example, the scheduling may be performed on a per symbol or per slot group basis. For example, TBoMS for PDSCH and/or PUSCH may be enhanced.
4) Parameters related to timelines for a new SCS may be defined and applied for communications.

The terminal 20 and/or the base station 10 may perform operations described in the following operation 1) to operation 7).

Operation 1) SCS greater than 960 kHz may be supported for a specific use case. For example, the specific use case may be a case of using a frequency band greater than 71 GHz, or may be a case of using an NTN.

The value of a new SCS may be a value that is scaled according to 2^{µ} times 15 kHz. In other words, a new SCS = 2^{µ} * 15 kHz. It is to be noted that µ may be an integer equal to or greater than 7. For example, 1,920 kHz SCS when µ = 7, 3,840 kHz SCS when µ = 8, and 7,680 kHz SCS when µ = 9 may be supported. It is to be noted that the slot boundary of a smaller SCS may always be aligned with the slot boundary of a larger SCS.

In addition, the new SCS value may be a value that is scaled according to M times 15 kHz, M times 30 kHz, M times 60 kHz, M times 120 kHz, M times 240 kHz, M times 480 kHz, or M times 960 kHz.

For example, the new SCS may be M * 15 kHz. It is to be noted that M may be an integer that is equal to or greater than 65. It is to be noted that the slot boundary of 15 kHz SCS may be always aligned with the slot boundary of a new SCS. The slot boundary of 30 kHz SCS, 60 kHz SCS, 120 kHz SCS, 240 kHz SCS, 480 kHz SCS, or 960 kHz SCS may be or may not be aligned with the slot boundary of a new SCS. The slot boundary of a certain smaller SCS may be or may not be aligned with the slot boundary of a certain larger SCS.

For example, the new SCS may be M * 30 kHz. It is to be noted that M may be an integer that is equal to or greater than 33. It is to be noted that the slot boundary of 15 kHz SCS and the slot boundary of 30 kHz SCS may be always aligned with the slot boundary of a new SCS. The slot boundary of 60 kHz SCS, 120 kHz SCS, 240 kHz SCS, 480 kHz SCS, or 960 kHz SCS may be or may not be aligned with the slot boundary of a new SCS. The slot boundary of a certain smaller SCS may be or may not be aligned with the slot boundary of a certain larger SCS.

For example, the new SCS may be M * 60 kHz. It is to be noted that M may be an integer that is equal to or greater than 17. It is to be noted that the slot boundary of 15 kHz SCS, the slot boundary of 30 kHz, and the slot boundary of 60 kHz may be always aligned with the slot boundary of a new SCS. The slot boundary of 120 kHz SCS, 240 kHz SCS, 480 kHz SCS, or 960 kHz SCS may be or may not be aligned with the slot boundary of a new SCS. The slot boundary of a certain smaller SCS may be or may not be aligned with the slot boundary of a certain larger SCS.

For example, the new SCS may be M * 120 kHz. It is to be noted that M may be an integer that is equal to or greater than 9. It is to be noted that the slot boundary of 15 kHz SCS, the slot boundary of 30 kHz, the slot boundary of 60 kHz, and the slot boundary of 120 kHz may be always aligned with the slot boundary of a new SCS. The slot boundary of 240 kHz SCS, 480 kHz SCS, or 960 kHz SCS may be or may not be aligned with the slot boundary of a new SCS. The slot boundary of a certain smaller SCS may be or may not be aligned with the slot boundary of a certain larger SCS.

For example, the new SCS may be M * 240 kHz. It is to be noted that M may be an integer that is equal to or greater than 5. It is to be noted that the slot boundary of 15 kHz SCS, the slot boundary of 30 kHz, the slot boundary of 60 kHz, the slot boundary of 120 kHz, and the slot boundary of 240 kHz may be always aligned with the slot boundary of a new SCS. The slot boundary of 480 kHz SCS or 960 kHz SCS may be or may not be aligned with the slot boundary of a new SCS. The slot boundary of a certain smaller SCS may be or may not be aligned with the slot boundary of a certain larger SCS.

For example, the new SCS may be M * 480 kHz. It is to be noted that M may be an integer that is equal to or greater than 3. It is to be noted that the slot boundary of 15 kHz SCS, the slot boundary of 30 kHz, the slot boundary of 60 kHz, the slot boundary of 120 kHz, the slot boundary of 240 kHz, and the slot boundary of 480 kHz may be always aligned with the slot boundary of a new SCS. The slot boundary of 960 kHz SCS may be or may not be aligned with the slot boundary of a new SCS. The slot boundary of a certain smaller SCS may be or may not be aligned with the slot boundary of a certain larger SCS.

For example, the new SCS may be M * 960 kHz. It is to be noted that M may be an integer that is equal to or greater than 2. It is to be noted that the slot boundary of 15 kHz SCS, the slot boundary of 30 kHz, the slot boundary of 60 kHz, the slot boundary of 120 kHz, the slot boundary of 240 kHz, the slot boundary of 480 kHz, and the slot boundary of 960 kHz may be always aligned with the slot boundary of a new SCS. The slot boundary of a certain smaller SCS may be or may not be aligned with the slot boundary of a certain larger SCS.

It is to be noted that M may be a value expressed as power of 2. For example, the above-described M may be replaced with 2^{M}.

According to the above-described operation 1), the value of a higher SCS can be appropriately determined.

Operation 2) The SCS greater than 960 kHz may be or may not be supported for SSB and/or PDCCH and/or PUCCH and/or PDSCH and/or PUSCH and/or PRACH.

For example, the SCS greater than 960 kHz may be supported only for PDSCH and PUSCH, and is not required to be supported for other channels or other signals.

For example, the SCS greater than 960 kHz may be supported for PDCCH, PUCCH, PDSCH, PUSCH and PRACH, and is not required to be supported for SSB.

For example, the SCS greater than 960 kHz may be supported for PDCCH, PUCCH, PDSCH, and PUSCH, and is not required to be supported for SSB or PRACH.

For example, the SCS greater than 960 kHz may be supported for channels in RRC_CONNECTED mode, and is not required to be supported for channels in RRC_IDLE and/or RRC_INACTIVE mode.

For example, the SCS greater than 960 kHz may be supported only for DL signals and/or DL channels (for example, PDSCH).

For example, the SCS greater than 960 kHz may be supported only for UL signals and/or UL channels (for example, PUSCH).

For example, the SCS greater than 960 kHz may be supported only for SSB.

According to the above-described operation 2), channels or signals to which a higher SCS is applied can be appropriately determined.

Operation 3) Multi-slot PDCCH monitoring capability and/or monitoring capability restriction (for example, monitoringCapabilityConfig is to be r17monitoringcapability (refer to Non-Patent Literature 4)) may be supported for the SCS greater than 960 kHz.

Option 1) The same combination (Xₛ, Yₛ) value as for the 480 kHz SCS or for the 960 kHz SCS may be supported for the SCS greater than 960 kHz.

Table 4 shows the maximum number of monitored PDCCH candidates in a group of Xₛ slots per combination (Xₛ,Yₛ) and per serving cell.

**[Table 4]**

| | **Maximum number** ${M}_{PDCCH}^{max , {X}_{s} , μ}$ **of monitored PDCCH candidates in a group of X*ₛ* slots per combination (*Xₛ,Yₛ*) and per serving cell** | | | |
|---|---|---|---|---|
| ***µ*** | (4, 1) | (4, 2) | (8, 1) | (8, 4) |
| 5 | 20 | 20 | - | - |
| 6 | 10 | 10 | 20 | 20 |
| 7 | 5 | 5 | 10 | 10 |
| 8 | - | - | 5 | 5 |

As illustrated in Table 4, the same combination (X_{S}, Yₛ) values for the 480 kHz SCS or for the 960 kHz SCS, that is, (4,1), (4,2), (8,1), (8,4) may be supported. In a cse where µ = 7, that is, 1,920 kHz SCS: (4,1) and 5; (4,2) and 5; (8,1) and 10; and (8,4) and 10 may be supported. In a case where µ = 8, that is, 3,840 kHz: (8,1) and 5; and (8,4) and 5 may be supported.

Table 5 shows the maximum number of non-overlapped CCEs in a group of Xₛ slots per combination (Xₛ, Yₛ) and per serving cell.

**[Table 5]**

| | **Maximum number of non-overlapped CCEs in a group of *Xₛ* slots per combination (*Xₛ,Yₛ*) and per serving cell** ${C}_{PDCCH}^{max , {X}_{s} , μ}$ | | | |
|---|---|---|---|---|
| ***µ*** | (4, 1) | (4, 2) | (8, 1) | (8, 4) |
| 5 | 32 | 32 | - | - |
| 6 | 16 | 16 | 32 | 32 |
| 7 | 8 | 8 | 16 | 16 |
| 8 | 4 | 4 | 8 | 8 |

As illustrated in Table 5, the same combination (Xₛ, Yₛ) values for the 480 kHz SCS or for the 960 kHz SCS, that is, (4,1), (4, 2), (8, 1), (8, 4) may be supported. In a case where µ = 7, that is, 1,920 kHz SCS: (4, 1) and 8; (4, 2) and 8; (8, 1) and 16; and (8, 4) and 16 may be supported. In a case where µ = 8, that is, 3,840 kHz: (4, 1) and 4; (4, 2) and 4; (8, 1) and 8; and (8, 4) and 8 may be supported.

A new combination (Xₛ, Yₛ) value may be supported for the SCS greater than 960 kHz. For examples, Xₛ may be a value greater than that for the SCS that is equal to or less than 960 kHz.

Table 6 shows the maximum number of monitored PDCHH candidates in a group of Xₛ slots per combination (Xₛ, Yₛ) and per service cell.

**[Table 6]**

| | **Maximum number** ${M}_{PDCCH}^{max , {X}_{s} , μ}$ **of monitored PDCCH candidates in a group of *Xₛ* slots per combination (*Xₛ,Yₛ*) and per serving cell** | | | | | |
|---|---|---|---|---|---|---|
| ***µ*** | (4, 1) | (4, 2) | (8, 1) | (8, 4) | (16,1) | (16,8) |
| 5 | 20 | 20 | - | - | - | - |
| 6 | 10 | 10 | 20 | 20 | - | - |
| 7 | - | - | - | - | 20 | 20 |
| 8 | - | - | - | - | 10 | 10 |

As illustrated in Table 6, new combination (Xₛ, Yₛ) values, i.e., (16, 1) and (16, 8) may be supported. In a case where µ = 7, that is, 1,920 kHz SCS: (16 ,1) and 20; (16, 8) and 20 may be supported. In a case where µ = 8, that is 3,840 kHz: (16, 1) and 10; and (16, 8) and 10 may be supported.

Table 7 shows the maximum number of non-overlapped CCEs in a group of Xₛ slots per combination (Xₛ, Yₛ) and per serving cell.

**[Table 7]**

| | **Maximum number of non-overlapped CCEs in a group of *Xₛ* slots per combination (*Xₛ,Yₛ*) and per serving cell** ${C}_{PDCCH}^{max , {X}_{s} , μ}$ | | | | | |
|---|---|---|---|---|---|---|
| ***µ*** | (4, 1) | (4, 2) | (8, 1) | (8, 4) | (16,1) | (16,8) |
| 5 | 32 | 32 | - | - | - | - |
| 6 | 16 | 16 | 32 | 32 | - | - |
| 7 | - | - | - | - | 32 | 32 |
| 8 | - | - | - | - | 16 | 16 |

As illustrated in Table 7, new combination (Xₛ, Yₛ) values, i.e., (16, 1) and (16, 8) may be supported. In a case where µ = 7, that is, 1,920 kHz SCS: (16, 1) and 32; and (16, 8) and 32 may be supported. In a case where µ = 8, that is, 3,840 kHz: (16, 1) and 16: and (16, 8) and 16 may be supported.

It is to be noted that a combination of the above-described option 1) and the above-described option 2) may be supported.

It is to be noted that the values in Table 4, Table 5, Table 6, and Table 7 are merely examples, and other values may be specified.

According to the above-described operation 3), the PDCCH monitoring capability may be appropriately determined and supported according to the SCS.

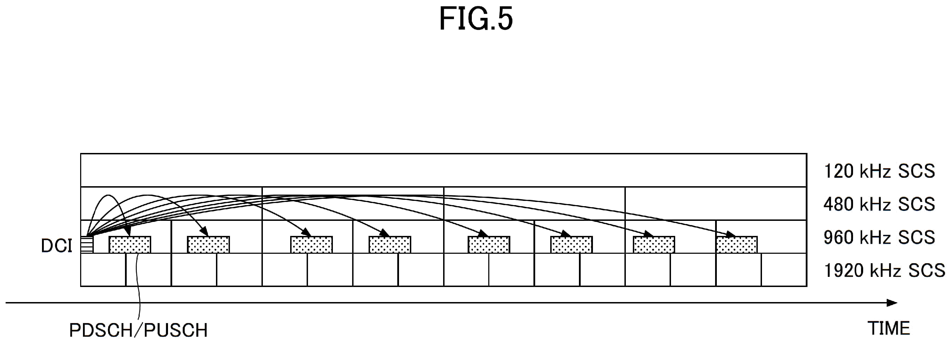

Operation 4) Fig. 5 is a drawing illustrating an example of multi-PDSCH/PUSCH scheduling in an embodiment of the present invention. Fig. 5 illustrates an example in which eight PDSCHs and/or PUSCHs are scheduled by single DCI in a case of 960 kHz SCS.

With respect to PDSCH and/or PUSCH to which the SCS greater than 960 kHz is applied, scheduling of PDSCHs and/or PUSCHs by single DCI may be supported in which the maximum number of scheduled PDSCHs and/or PUSCHs is greater than 8.

In addition, the number of PDSCHs and/or PUSCHs within one slot scheduled by single DCI or multi-DCI may be limited to be 1.

A plurality of repetitions may be supported for each of the scheduled PDSCHs and/or PUSCHs or for a specific PDSCH and/or PUSCH. The number of repetitions may be indicated or configured separately for each PDSCH and/or PUSCH. For example, in a certain TDRA row, the number repK of repetitions may be configured separately for each SLIV (Start and length indicator value). In addition, the common number of repetitions may be indicated or configured for all of the PDSCHs and/or PUSCHs. For example, in a certain TDRA row, a single number repK of repetitions may be configured for all of the SLIVs.

With respect to the total number of HARQ processes for PDSCHs and/or PUSCHs in a certain serving cell, a value greater than 32 may be supported.

According to the above-described operation 4), PDSCHs and/or PUSCHs can be efficiently scheduled depending on the SCSs.

Operation 5) Block-based PDSCH and/or PUSCH scheduling may be supported for PDSCH and/or PUSCH to which the SCS greater than 960 kHz is applied. The block-based PDSCH and/or PUSCH scheduling means that the granularity of the time domain resources for PDSCH and/or PUSCH scheduling is a block.

The block may mean X symbols, X slots, X subframes, or X frames. For example, the reference SCS may be defined or configured by RRC signaling, and X may be specified according to X = actual SCS / reference SCS. For example, in a case where the reference SCS is 960 kHz and the actual SCS is 1,920 kHz, X may be equal to 1,920/960 = 2. The target of the configuration by RRC signaling may be for each BWP, or may be for each of the DCI formats (DCI format 0_0, 0_1, 0_2, 0_3, 1_0, 1_1, 1_2, or 1_3).

In addition, for example, the value of X may be defined by the technical specification, or may be configured by RRC signaling. The target of the configuration by RRC signaling may be for each BWP, or may be for each of the DCI formats (for example, DCI format 0_0, 0_1, 0_2, 0_3, 1_0, 1_1, 1_2, or 1_3).

In addition, the block may be specified by a certain duration. For example, the block may be Y milliseconds, Y seconds, etc. For example, the value of Y may be defined by the technical specification, or may be configured by RRC signaling. The target of the configuration by RRC signaling may be for each BWP, or may be for each of the DCI formats (for example, DCI format 0_0, 0_1, 0_2, 0_3, 1_0, 1_1, 1_2, or 1_3).

The block-based PDSCH and/or PUSCH scheduling may be enabled as described in the following 1) to 5).
1) The block-based PDSCH and/or PUSCH scheduling may be always enabled for the SCS greater than 960 kHz.
2) The block-based PDSCH and/or PUSCH scheduling may be explicitly configured and enabled by RRC signaling. The target of the configuration by RRC signaling may be for each BWP, or may be for each of the DCI formats (for example, DCI format 0_0, 0_1, 0_2, 0_3, 1_0, 1_1, 1_2, or 1_3).
3) Whether or not the block-based PDSCH and/or PUSCH scheduling is enabled may be implicitly determined based on whether or not the above-described reference SCS, the above-described X, or the above-described Y is configured. For example, the block-based PDSCH and/or PUSCH scheduling may be enabled in a case where the above-described SCS, the above-described X, or the above-described Y is configured.
4) Whether or not the block-based PDSCH and/or PUSCH scheduling is enabled may be determined based on the scheduling DCI. For example, a new DCI field for indicating whether the scheduling granularity of PDSCHs and/or PUSCHs scheduled by the DCI is a legacy granularity or a block-based granularity may be configured in the conventional DCI format to which the conventional RNTI is applied. The conventional DCI format may be, for example, DCI format 0_0, 0_1, 0_2, 0_3, 1_0, 1_1, 1_2, or 1_3. In addition, the scheduling granularity of PDSCHs and/or PUSCHs scheduled by the DCI may be indicated to be a block-based granularity by using a new DCI format or by applying a new RNTI to the conventional DCI format.
5) The block-based PDSCH and/or PUSCH scheduling may be enabled based on the TDRA table configuration. For example, the block-based PDSCH and/or PUSCH scheduling may be enabled in a case where the indicated TDRA row includes the time domain resource allocation based on a block unit. The time domain resource allocation based on a block unit may be a time domain resource allocation in which a block level offset and/or a block level length are/is used.

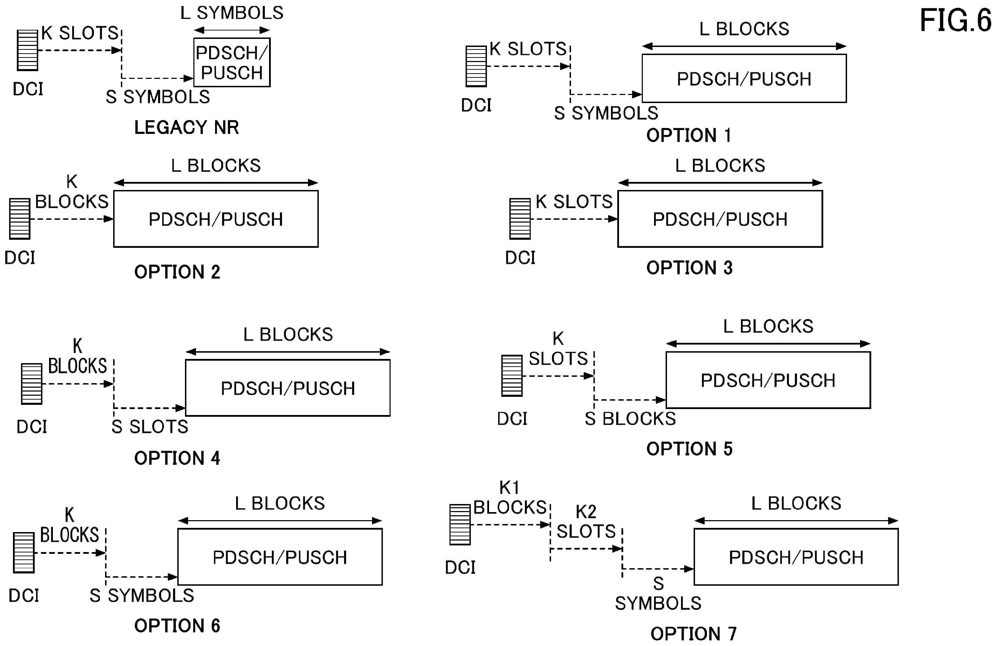

Fig. 6 is a drawing illustrating an example of time domain resource allocation in an embodiment of the present invention. Table 8 is a table illustrating an example of time domain resource allocation in an embodiment of the present invention.

**[Table 8]**

| | Starting position of PDSCH/PUSCH | Length of PDSCH/PUSCH |
|---|---|---|
| Legacy NR | Slot level offset K0/K2 | Symbol level length L in a slot |
| | Symbol level offset S within slot | |
| Option 1 | Slot level offset K | Block level length L |
| | Symbol level offset S within slot | |
| Option 2 | Block level offset K | Block level length L |
| Option 3 | Slot level offset K | Block level length L |
| Option 4 | Block level offset K | Block level length L |
| | Slot level offset S within a block (when 1 block > 1 slot) | |
| Option 5 | Slot level offset K | Block level length L |
| | Block level offset S within a slot (when 1 block < 1 slot) | |
| Option 6 | Block level offset K | Block level length L |
| | Symbol level offset S within a block | |
| Option 7 | Block level offset K1 | Block level length L |
| | Slot level offset K2 within a block (when 1 block > 1 slot) | |
| | Symbol level offset S within a slot | |

The block-based PDSCH and/or PUSCH scheduling may be performed as described in option 1 to option 7 as illustrated in Fig. 6 and Table 8.

In the legacy NR, the starting position of PDSCH and/or PUSCH is specified by a slot level offset K0/K2 and a symbol level offset S in a slot, and the length of PDSCH and/or PUSCH is specified by a symbol level length L in a slot.

In option 1, the starting position of PDSCH and/or PUSCH is specified by a slot level offset K and a symbol level offset within a slot, and the length of PDSCH and/or PUSCH is specified by a block level length L.

In option 2, the starting position of PDSCH and/or PUSCH is specified by a block level offset K, and the length of PDSCH and/or PUSCH is specified by a block level length L.

In option 3, the starting position of PDSCH and/or PUSCH is specified by a slot level offset K, and the length of PDSCH and/or PUSCH is specified by a block level length L.

In option 4, the starting position of PDSCH and/or PUSCH is specified by a block level offset K and a slot level offset S within a block (when a block > a slot), and the length of PDSCH and/or PUSCH is specified by a block level length L.

In option 5, the starting position of PDSCH and/or PUSCH is specified by a slot level offset K and a block level offset S within a slot (when a block < a slot), and the length of PDSCH and/or PUSCH is specified by a block level length L.

In option 6, the starting position of PDSCH and/or PUSCH is specified by a block level offset K and a symbol level offset S within a block, and the length of PDSCH and/or PUSCH is specified by a block level length L.

In option 7, the starting position of PDSCH and/or PUSCH is specified by a block level offset K1, a slot level offset K2 within a block, and a symbol level offset S within a slot, and the length of PDSCH and/or PUSCH is specified by a block level length L.

It is to be noted that the block level length in each of the above-described options may be replaced with a slot level and/or symbol level length. The maximum number of blocks corresponding to the length of one PDSCH and/or PUSCH occasion may be defined in the technical specification, may be configured by RRC signaling, or may be reported by using the UE capability. For example, with respect to the PDSCH and/or PUSCH, up to 14 blocks may be enabled to be arranged.

The block-based PDSCH and/or PUSCH occasion may be configured across a plurality of slots. With respect to the PUSCH across the plurality of slots, the transmission power may be determined for each slot or for the entire PUSCH occasion across the plurality of slots.

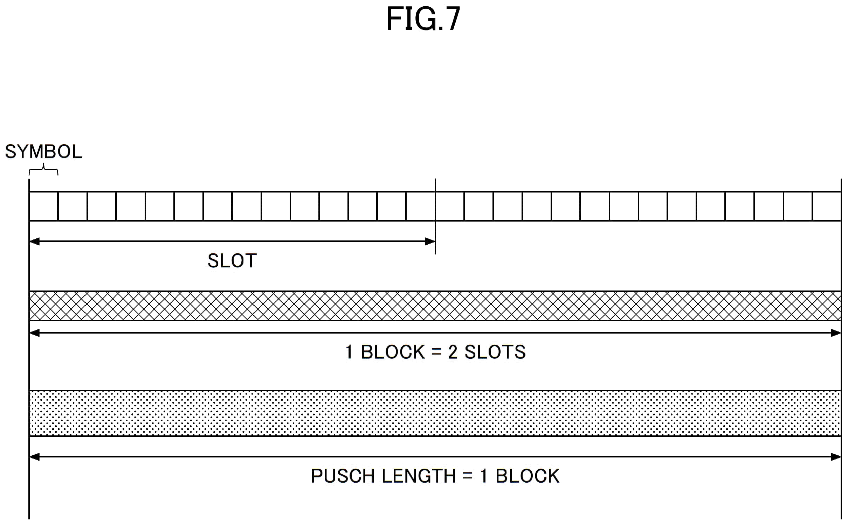

Fig. 7 is a drawing illustrating an example (1) of per block time domain resource allocation in an embodiment of the present invention. As illustrated in Fig. 7, one block may be two slots. The PUSCH length may be one block.

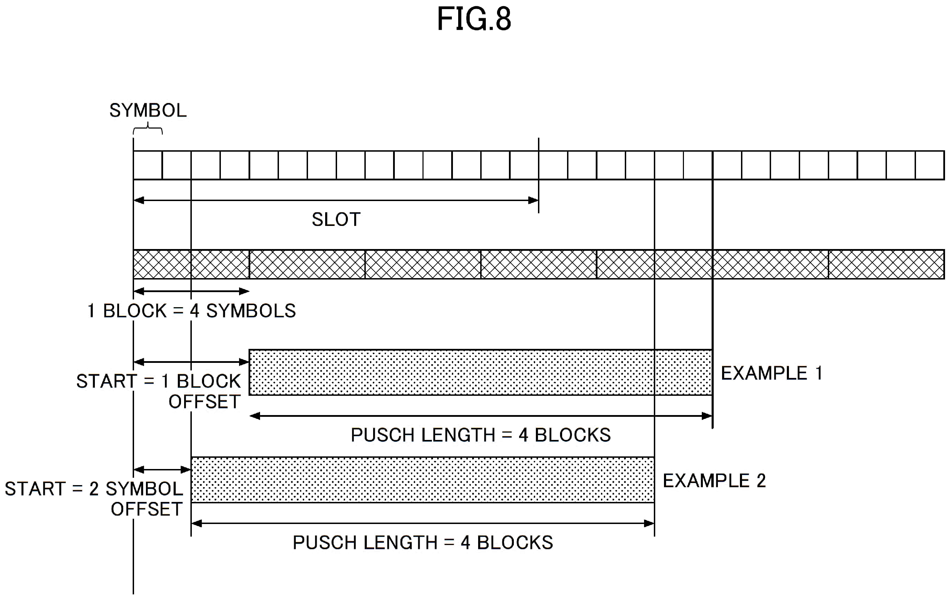

Fig. 8 is a drawing illustrating an example (2) of per block time domain resource allocation in an embodiment of the present invention. As illustrated in example 1 in Fig. 8, one block may be four symbols, an offset of the starting position may be one block, and the PUSCH length may be four blocks. As illustrated in example 2 in Fig. 8, one block may be four symbols, an offset of the starting position may be two symbols, and the PUSCH length may be four blocks.

In addition, when PUSCH scheduling is performed with the block-based granularity, the frequency hopping may be configured as described in the following 1) and 2). For example, one of or a combination of a plurality of: inter-slot frequency hopping; intra-slot frequency hopping; inter-block frequency hopping; intra-block frequency hopping; inter-block group frequency hopping; and intra-block group frequency hopping may be used as the frequency hopping method. It is to be noted that the block group may be composed of a plurality of groups.

1) The PUSCH frequency hopping method may be determined based on the conventional frequency hopping parameter. For example, when intra-slot frequency hopping is configured, indicated, or determined, and PUSCH is scheduled based on the block-based granularity, the frequency hopping method may be determined as described in the following a) to c).
a) The UE may apply intra-block frequency hopping to each block of the PUSCH occasion. The parameter N_{symb}^{PUSCH,s} (refer to Non-Patent Literature 5) may be interpreted as the number of symbols of PUSCH transmission in each block.
b) The UE may apply intra-block frequency hopping to each block group of the PUSCH occasion. The parameter N_{symb}^{PUSCH,s} may be interpreted as the number of blocks of PUSCH transmission in each block group.
c) The UE may apply intra-block frequency hopping to each slot of the PUSCH occasion.

In addition, for example, when inter-slot frequency hopping is configured, indicated, or determined, and PUSCH is scheduled based on the block-based granularity, the frequency hopping method may be determined as described in the following a) to c).
a) The UE may perform inter-block frequency hopping. The number of slots used for the frequency hopping in clause 6. 3. 1 in Non-Patent Literature 5 may be replaced with the number of blocks.
b) The UE may perform inter-block group frequency hopping. The number of slots used for the frequency hopping in clause 6. 3. 1 in Non-Patent Literature 5 may be replaced with the number of block groups.
c) The UE may apply inter-slot frequency hopping to each slot of the PUSCH.

2) Additional parameters for configuring or indicating the frequency hopping method may be implemented. For example, one of: inter-slot PUSCH frequency hopping; intra-slot PUSCH frequency hopping; inter-block PUSCH frequency hopping; intra-block PUSCH frequency hopping; inter-block group PUSCH frequency hopping; and intra-block group PUSCH frequency hopping may be configured by the added parameters, and the corresponding frequency hopping method may be used.

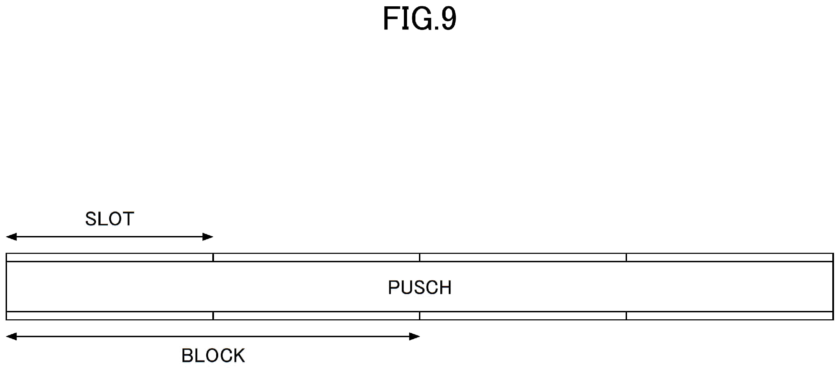

Fig. 9 is a drawing illustrating an example without frequency hopping in an embodiment of the present invention. Fig. 9 shows an example in which one block is two slots.

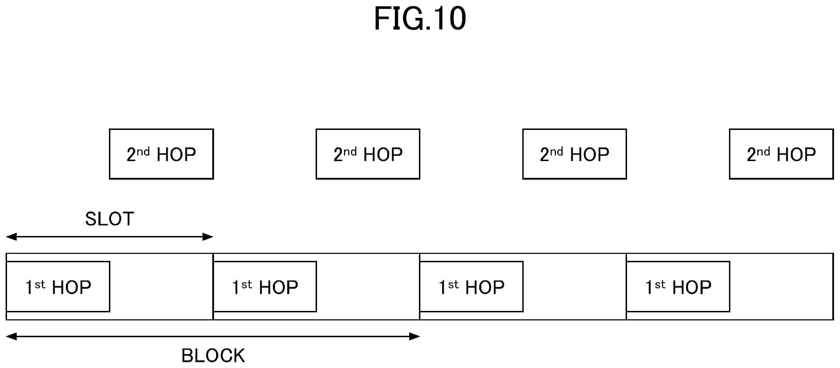

Fig. 10 is a drawing illustrating an example (1) of frequency hopping in an embodiment of the present invention. Fig. 10 is an example in which one block is two slots and intra-slot frequency hopping is used. The hop length is a half slot.

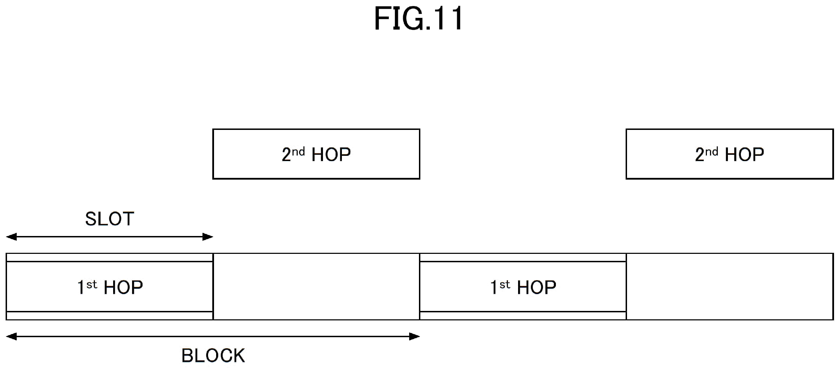

Fig. 11 is a drawing illustrating an example (2) of frequency hopping in an embodiment of the present invention. Fig. 11 is an example in which one block is two slots and intra-block frequency hopping is used. The hop length is a half slot.

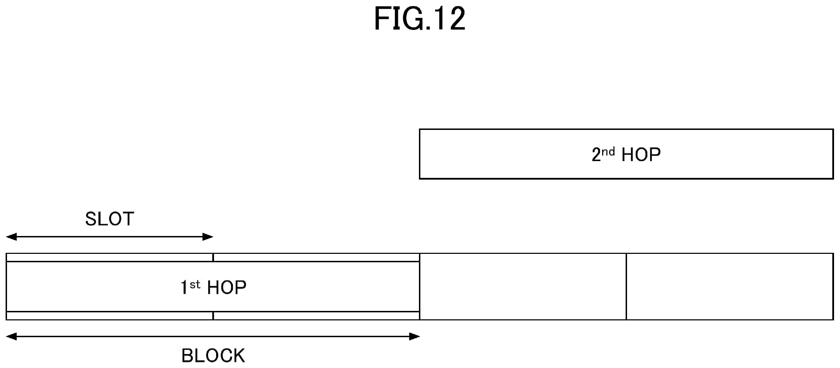

Fig. 12 is a drawing illustrating an example (3) of frequency hopping in an embodiment of the present invention. Fig. 12 is an example in which one block is two slots and intra-block group frequency hopping is used. The hop length is one block. One PUSCH occasion is expected to correspond to one block group.

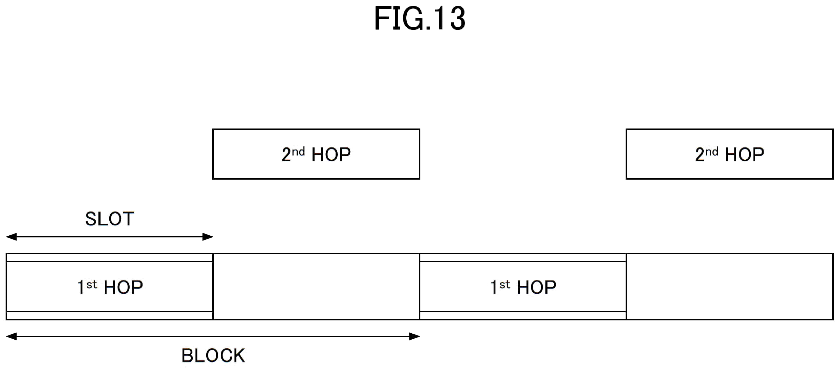

Fig. 13 is a drawing illustrating an example (4) of frequency hopping in an embodiment of the present invention. Fig. 13 is an example in which one block is two slots and inter-slot frequency hopping is used. The hop length is one slot.

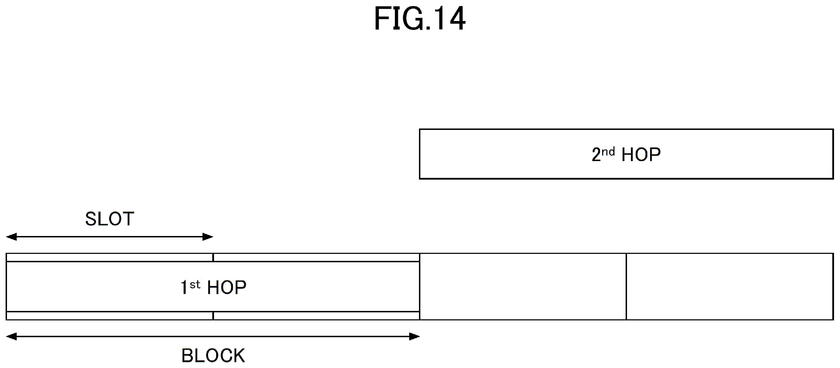

Fig. 14 is a drawing illustrating an example (5) of frequency hopping in an embodiment of the present invention. Fig. 14 is an example in which one block is two slots and inter-block frequency hopping is used. The hop length is one block.

In addition, when PUSCH scheduling is performed with the block-based granularity, DMRS (Demodulation reference signal) may be determined as described in the following 1) and 2).

1) DMRS positions may be determined based on the scaling. DMRS tables are not required to be changed. DMRS may be determined based on the scaling as described in the following a) to c).
a) DMRS positions for PDSCH and/or PUSCH for each slot may be determined. The value l_{d} may correspond to the number of symbols within the slot in each slot. In addition, DMRS positions for PDSCH and/or PUSCH for each block may be determined. The value I_{d} may be correspound to the number of symbols within the block in each block.

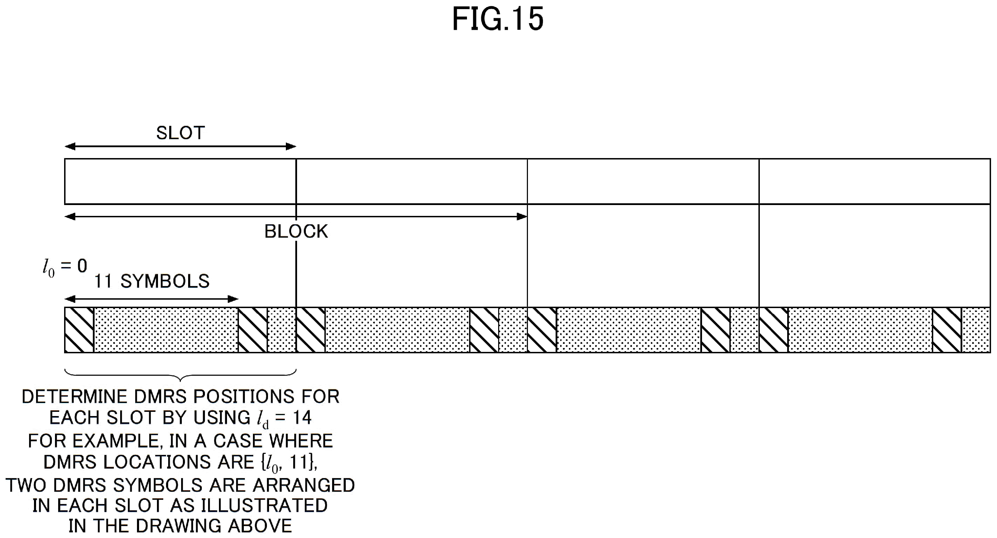

Fig 15 is a drawing illustrating an example (1) of DMRS arrangement in an embodiment of the present invention. Fig 15 illustrates and example in which one block is two symbols. Table 9 (refer to Non-Patent Literature 6) is an example of a table used for determining the DMRS positions.

**[Table 9]**

| *l_{d}* in symbols | DM-RS positions *l̅* | | | | | | | |
|---|---|---|---|---|---|---|---|---|
| | PUSCH mapping type A | | | | PUSCH mapping type B | | | |
| | *dmrs-A dditionalPosition* | | | | *dmrs-AdditionalPosition* | | | |
| | *pos0* | *pos1* | *pos2* | *pos3* | *pos0* | *pos1* | *pos2* | *pos3* |
| <4 | - | - | - | - | *l*₀ | *l*₀ | *l*₀ | *l*₀ |
| 4 | *l*₀ | *l*₀ | *l*₀ | *l*₀ | *l*₀ | *l*₀ | *l*₀ | *l*₀ |
| 5 | *l*₀ | *l*₀ | *l*₀ | *l*₀ | *l*₀ | *l*₀, 4 | *l*₀, 4 | *l*₀, 4 |
| 6 | *l*₀ | *l*₀ | *l*₀ | *l*₀ | *l*₀ | *l*₀, 4 | *l*₀, 4 | *l*₀, 4 |
| 7 | *l*₀ | *l*₀ | *l*₀ | *l*₀ | *l*₀ | *l*₀, 4 | *l*₀, 4 | *l*₀, 4 |
| 8 | *l*₀ | *l*₀*,* 7 | *l*₀, 7 | *l*₀*,* 7 | *l*₀ | *l*₀, 6 | *l*₀*,* 3, 6 | *l*₀*,* 3, 6 |
| 9 | *l*₀ | *l*₀, 7 | *l*₀, 7 | *l*₀, 7 | *l*₀ | *l*₀, 6 | *l*₀*,* 3, 6 | *l*₀*,* 3, 6 |
| 10 | *l*₀ | *l*₀, 9 | *l*₀*,* 6, 9 | *l*₀, 6, 9 | *l*₀ | *l*₀, 8 | *l*₀*,* 4, 8 | *l*₀*,* 3, 6, 9 |
| 11 | *l*₀ | *l*₀, 9 | *l*₀, 6, 9 | *l*₀, 6, 9 | *l*₀ | *l*₀, 8 | *l*₀*,* 4, 8 | *l*₀, 3, 6, 9 |
| 12 | *l*₀ | *l*₀, 9 | *l*₀*,* 6, 9 | *l*₀*,* 5, 8, 11 | *l*₀ | *l*₀*,* 10 | *l*₀*,* 5, 10 | *l*₀*,* 3, 6, 9 |
| 13 | *l*₀ | *l*₀, 11 | *l*₀*,* 7, 11 | *l*₀, 5, 8, 11 | *l*₀ | *l*₀, 10 | *l*₀*,* 5, 10 | *l*₀*,* 3, 6, 9 |
| 14 | *l*₀ | *l*₀, 11 | *l*₀*,* 7, 11 | *l*₀*,* 5, 8, 11 | *l*₀ | *l*₀, 10 | *l*₀, 5, 10 | *l*₀*,* 3, 6, 9 |

Fig 15 illustrates an example of DMRS positions in a case of PUSCH mapping type A in which I_{d} = 14 and dmrs-AdditionalPosition is pos1 in Table 9. As illustrated in Fig. 15, in a case where l_{d} = 14, {l₀, 11}, and l₀ = 0, DMRSs are arranged in symbol #0 and symbol #11 within a certain slot.
b) The PDSCH and/or PUSCH occasion may be divided into X parts and DMRS positions may be determined for each part. For example, X may be a number of symbols per block. Each part may be composed of L PDSCH and/or PUSCH symbols, and L may be a number of blocks for PDSCH and/or PUSCH allocation. In each part, the value of l_{d} may be equal to L, and the value of l_{d} may correspond to a number of symbols in each part.

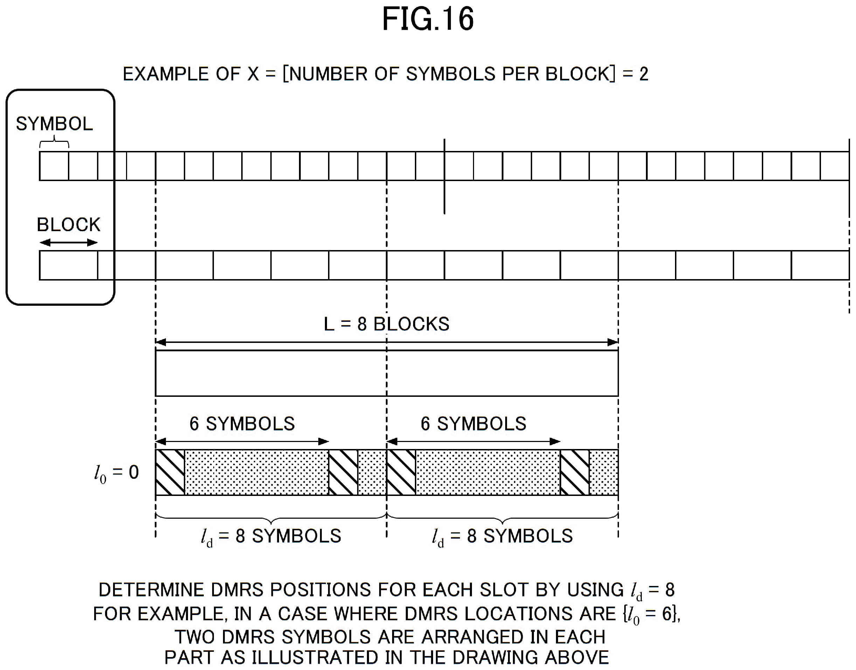

Fig. 16 is a drawing illustrating an example (2) of DMRS arrangement in an embodiment of the present invention. Fig. 16 illustrates an example in which one block is two symbols. Fig. 16 illustrates an example of DMRS positions in a case of PUSCH mapping type B in which l_{d} = 8 and dmrs-AdditionalPosition is pos1 in Table 9. As illustrated in Fig. 16, in a case where l_{d} = 8, {l₀, 6}, l₀ = 0, and L = 8, eight blocks are divided into two parts, and DMRSs are arranged in symbol #0 and symbol #6 within the first-half four blocks and in symbol #0 and symbol #6 within the second-half four blocks.

c) DMRS positions may be determined based on the scaling according to the block granularity l_{d} and l bar. For example, when determining the DMRS positions by using Table 9, l_{d} may be used as a unit of the number of blocks. The determined DMRS positions including l₀ and the additional DMRS position may be interpreted based on the block unit for determining the DMRS positions. For example, in a case where the number of blocks for PDSCH and/or PUSCH allocation is L, l_{d} may be used as L in the table. With respect to each of the determined DMRS positions, the DMRS length may be any one of one symbol, two symbols, one block, or two blocks.

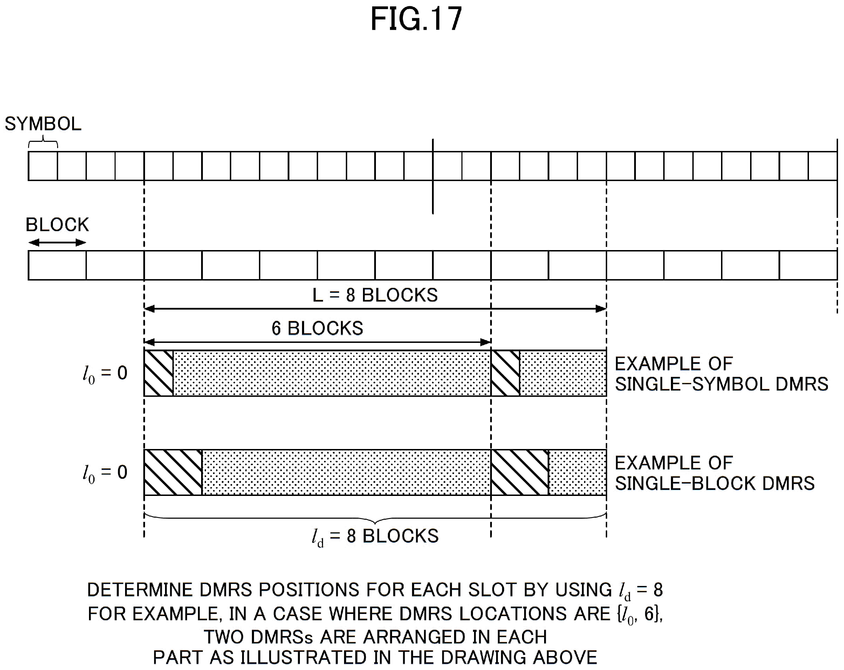

Fig. 17 is a drawing illustrating an example (3) of DMRS arrangement in an embodiment of the present invention. Fig. 17 illustrates an example in which one block is two symbols. Fig. 17 illustrates an example of DMRS positions in a case of PUSCH mapping type B in which l_{d} = 8 and dmrs-AdditionalPosition is pos1 in Table 9.

As illustrated in Fig. 17, in a case of {l₀, 6} and a single-symbol DMRS, the starting symbol of the first DMRS position is located, when frequency hopping is disabled, at the first or the last symbol of a block located at the l₀-th block relative to the top of a PDSCH and/or PUSCH mapping type A slot or relative to the top of a PDSCH and/or PUSCH mapping type B.

In a case of {l₀, 6} and a single-symbol DMRS, the starting symbol of the second DMRS position is located, when frequency hopping is enabled, at the first or the last symbol of a block located at the l₀-th block relative to the beginning of each hop.

As illustrated in Fig. 17, in a case of {l₀, 6} and a single-symbol DMRS, the starting symbol of the second DMRS position is located, when frequency hopping is disabled, at the first or the last symbol of a block located at the 6-th block relative to the top of a PDSCH and/or PUSCH mapping type A slot or relative to the top of a PDSCH and/or PUSCH mapping type B.

In a case of {l₀, 6} and a single-symbol DMRS, the starting symbol of the second DMRS position is located, when frequency hopping is enabled, at the first or the last symbol of a block located at the 6-th block relative to the beginning of each hop.

As illustrated in Fig. 17, in a case of {l₀, 6} and a single-block DMRS, the starting symbol group of the first DMRS position is located, when frequency hopping is disabled, at a block located at the l₀-th block relative to the top of a PDSCH and/or PUSCH mapping type A slot or relative to the top of a PDSCH and/or PUSCH mapping type B.

In a case of {l₀, 6} and a single-block DMRS, the starting symbol group of the second DMRS position is located, when frequency hopping is enabled, at a block located at the l₀-th block relative to the beginning of each hop.

As illustrated in Fig. 17, in a case of {l₀, 6} and a single-block DMRS, the starting symbol group of the second DMRS position is located, when frequency hopping is disabled, at a block located at the 6-th block relative to the top of a PDSCH and/or PUSCH mapping type A slot or relative to the top of a PDSCH and/or PUSCH mapping type B.

In a case of {l₀, 6} and a single-block DMRS, the starting symbol group of the second DMRS position is located, when frequency hopping is enabled, at a block located at the 6-th block relative to the beginning of each hop.

2) DMRS positions may be determined based on the enhancement of the conventional DMRS table. The conventional DMRS table may be any one of Table 6.4.1.1.3-3, Table 6.4.1.1.3-4, Table 6.4.1.1.3-6, Table 7.4.1.1.2-3, and Table 7.4.1.1.2-4 in Non-Patent Literature 6.

For example, when determining the DMRS positions by using the DMRS table, l_{d} may be used as a unit of the number of symbols. The determined DMRS positions including l₀ and the additional DMRS position may be interpreted based on the symbol unit for determining the DMRS positions. With respect to the PDSCH and/or PUSCH length, a length greater than 14 symbols may be supported in the DMRS table.

Table 10 is an example of a new DMRS table obtained by enhancing the conventional DMRS table.

**[Table 10]**

| *l_{d}* in of symbols | DM-RS positions | | | | | | | |
|---|---|---|---|---|---|---|---|---|
| | PDSCH mapping type A | | | | PDSCH mapping type B | | | |
| | *dmrs-AdditionalPosition* | | | | *dmrs-AdditionalPosition* | | | |
| | *pos0* | *pos1* | *pos2* | *pos3* | *pos0* | *pos1* | *pos2* | *pos3* |
| 2 | - | - | - | - | *l*₀ | *l*₀ | *l*₀ | *l*₀ |
| 3 | *l*₀ | *l*₀ | *l*₀ | *l*₀ | *l*₀ | *l*₀ | *l*₀ | *l*₀ |
| 4 | *l*₀ | *l*₀ | *l*₀ | *l*₀ | *l*₀ | *l*₀ | *l*₀ | *l*₀ |
| .... | | | | | | | | |
| 14 | *l*₀ | | *l*₀, 7, 11 | *l*₀, 5, 8, 11 | *l*₀ | *l*₀, 9 | *l*₀, 5, 9 | *l*₀, 3, 6, 9 |
| 15 | *l*₀ | *l*₀, 9 | *l*₀, 7, 11 | *l*₀, 5, 8, 11 | *l*₀ | *l*₀, 9 | *l*₀, 5, 9 | *l*₀, 3, 6, 9 |
| .... | | | | | | | | |
| 28 | *l*₀ | *l*₀, 16 | *l*₀, 11, 22 | *l*₀, 9, 16, 22 | *l*₀ | *l*₀, 16 | *l*₀, 10, 21 | *l*₀, 8, 16, 24 |

As illustrated in Table 10, I_{d} greater than 14 may be supported. The DMRS position corresponding to I_{d} greater than 14 may be the same as, or may be different from, the conventional DMRS position.

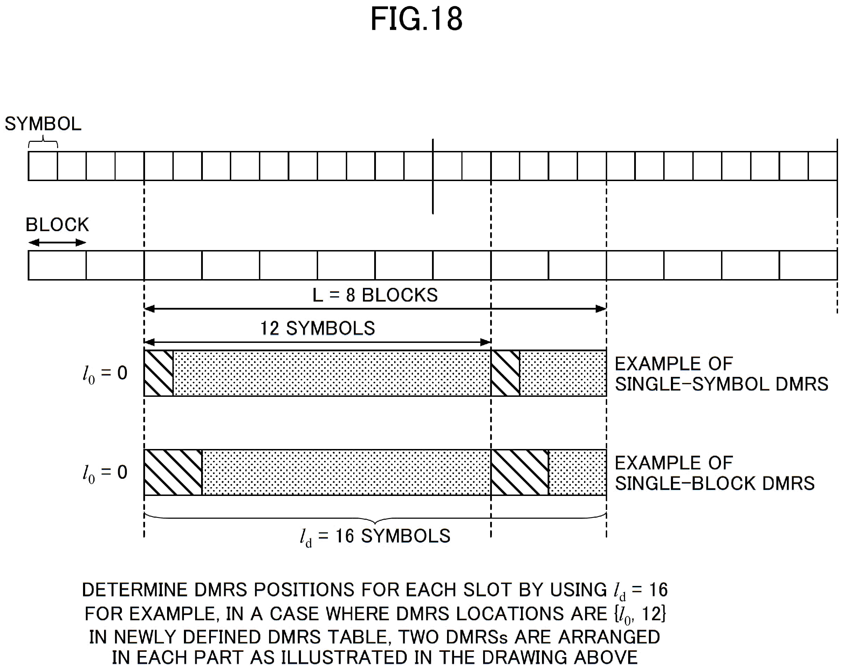

Fig 18 is a drawing illustrating an example (4) of DMRS arrangement in an embodiment of the present invention. Fig 18 illustrates an example in which one block is two symbols and I_{d} is 16.

As illustrated in Fig. 18, in a case of {I₀, 12} and a single-symbol DMRS, the starting symbol of the first DMRS position is located, when frequency hopping is disabled, at a symbol located at the I₀-th symbol relative to the top of a PDSCH and/or PUSCH mapping type A slot or relative to the top of a PDSCH and/or PUSCH mapping type B.

In a case of {l₀, 12} and a single-symbol DMRS, the starting symbol of the second DMRS position is located, when frequency hopping is enabled, at a symbol located at the l₀-th symbol relative to the top of each hop.

As illustrated in Fig. 18, in a case of {l₀, 12} and a single-symbol DMRS, the starting symbol of the second DMRS position is located, when frequency hopping is disabled, at a symbol located at the 12-th symbol relative to the top of a PDSCH and/or PUSCH mapping type A slot or relative to the top of a PDSCH and/or PUSCH mapping type B.

In a case of {l₀, 12} and a single-symbol DMRS, the starting symbol of the second DMRS position is located, when frequency hopping is enabled, at a symbol located at the 12-th symbol relative to the top of each hop.

As illustrated in Fig. 18, in a case of {l₀, 12} and a single-block DMRS, the starting symbol of the first DMRS position is located, when frequency hopping is disabled, at a symbol located at the l₀-th symbol relative to the top of a PDSCH and/or PUSCH mapping type A slot or relative to the top of a PDSCH and/or PUSCH mapping type B.

In a case of {l₀, 12} and a single-block DMRS, the starting symbol of the second DMRS position is located, when frequency hopping is enabled, at a symbol located at the l₀-th symbol relative to the top of each hop.

As illustrated in Fig. 18, in a case of {l₀, 12} and a single-block DMRS, the starting symbol group of the second DMRS position is located, when frequency hopping is disabled, at a symbol located at the 12-th symbol relative to the top of a PDSCH and/or PUSCH mapping type A slot or relative to the top of a PDSCH and/or PUSCH mapping type B.

In a case of {l₀, 12} and a single-block DMRS, the starting symbol group of the second DMRS position is located, when frequency hopping is enabled, at a symbol located at the 12-th symbol relative to the top of each hop.

According to the above-described operation 5), the DMRS structure that is adapted to the higher SCS can be implemented.

Operation 6) TBoMS may be applied to a PDSCH and/or PUSCH in the BWP for a BWP to which the SCS greater than 960 kHz is applied. For example, TBoMS described in the following 1) to 4) may be used.
1) TBoMS in which a single TB is composed of a plurality of CBs (Code blocks) for PUSCH. The above-described TBoMS may be based on the conventional TBoMS method.
2) TBoMS in which each TB is composed of two code words in which a single CB and/or a plurality of CBs for PUSCH are included.
3) TBoMS in which a single TB is composed of a single code word in which a single CB for PDSCH is included.
4) TBoMS in which each TB is composed of two code words in which a single CB and/or a plurality of CBs for PDSCH are included.

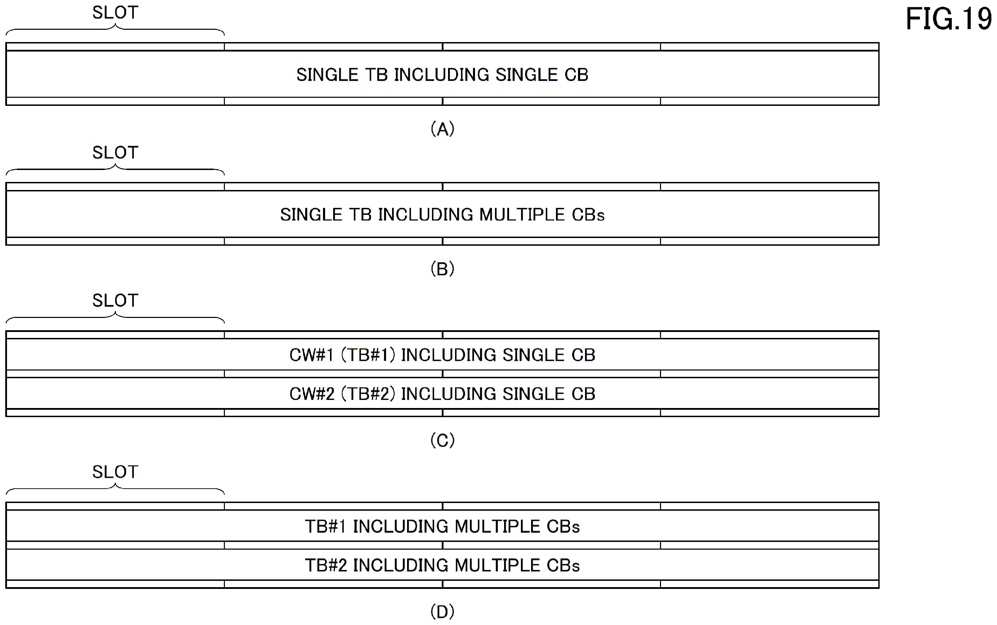

Fig. 19 is a drawing illustrating an example of TBoMS in an embodiment of the present invention.

The (A) that is illustrated in Fig. 19 is an example in which a single TB composed of a single CB is arranged across four slots. The (B) that is illustrated in Fig. 19 is an example in which a single TB composed of a plurality of CBs is arranged across four slots.

The (C) that is illustrated in Fig. 19 is an example in which TB#1 composed of CW#1 (Code word #1) composed of a single CB and TB#2 composed of CW#2 (Code word #2) composed of a single CB are arranged across four slots.

The (D) that is illustrated in Fig. 19 is an example in which TB#1 composed of a plurality of CBs and TB#2 composed of a plurality of CBs are arranged across four slots.

According to the above-described operation 6), the TBoMS that is adapted to the higher SCS can be used.

Operation 7) Parameters related to timelines may be enhanced for the SCS greater than 960 kHz. With respect to a parameter related to the time length, the value for the SCS greater than 960 kHz, the value range, or the value candidates may be determined by multiplying the 120 kHz SCS with M. For example, M may be a value obtained by dividing the new SCS with 120. For example, in a case of 1,920 kHz SCS, M may be equal to 1,920/120 = 16.

With respect to a parameter related to the counting number for the SCS greater than 960 kHz, for example, maxNumberRxTxBeamSwitchDL, the smallest value among the values supported for the SCSs equal to or less than 960 kHz may be used.

The parameter may be defined as a parameter related to timelines related to beam management for the SCS greater than 960 kHz (refer to Non-Patent Literature 5) as described in the following 1) to 5).

### 1) timeDurationForQCL

This parameter indicates the minimum number of OFDM symbols required by the UE to perform PDCCH reception and applying spatial QCL (Quasi co-location) information received in DCI for PDSCH reception processing. The value of this parameter may be a value obtained by multiplying the number of OFDM symbols in a case of 120 kHz SCS with M.

### 2) beamSwitchTiming/beamSwitchTiming-r16

This parameter indicates the minimum number of OFDM symbols between DCI triggering aperiodic CSI-RS and aperiodic CSI-RS. The value of this parameter may be a value obtained by multiplying the number of OFDM symbols in a case of 120 kHz SCS with M.

### 3) beamReportTiming

This parameter indicates the minimum number of OFDM symbols between the last symbol of SSB or CSI-RS and the first symbol of the transmission channel including the beam report. The value of this parameter may be a value obtained by multiplying the number of OFDM symbols in a case of 120 kHz SCS with M.

### 4) maxNumberRxTxBeamSwitchDL

This parameter indicates the maximum number of transmission and reception beams that can be performed by the UE during a slot. This parameter may be one of 1, {1, 2}, {1, 2, 4}, or {1, 2, 4, 7}. A different value may be applied to this parameter in a case of different SCS.

### 5) beamAppTime

This parameter indicates the number of symbols between the last symbol of PUCCH for unified TCI state indication and the timing of using the unified TCI state. The value of this parameter may be a value obtained by multiplying the number of OFDM symbols in a case of 120 kHz SCS with M.

The parameter may be defined as a parameter related to timelines related to processing time for the SCS greater than 960 kHz (refer to Non-Patent Literature 5) as described in the following 1) to 7).

### 1) N1, N2, N3

N1 indicates PDSCH processing time. N2 indicates PUSCH preparation time. N3 indicates HARQ-ACK multiplexing time. The value of this parameter may be a value obtained by multiplying the number of OFDM symbols in a case of 120 kHz SCS with M.

### 2) K0, K1, K2

K0 indicates a slot offset between DCI and scheduled PDSCH. K1 indicates a slot offset between the last slot of PDSCH and a slot for transmitting the corresponding HARQ-ACK. K2 indicates a slot offset between DCI and scheduled PUSCH. The range of K0 may be a range from 0 to 128 * M. The range of K1 may be a range from -1 to 128 * M - 1. The range of K2 may be a range from 0 to 128 * M.

### 3) Z1, Z2, Z3

These parameters indicate timelines of the CSI processing time. The value of this parameter may be a value obtained by multiplying the number of OFDM symbols in a case of 120 kHz SCS with M.

### 4) N

This parameter indicates a minimum offset between SPS release and HARQ-ACK and a minimum offset between SCell dormancy and HARQ-ACK. The value of this parameter may be a value obtained by multiplying the number of OFDM symbols in a case of 120 kHz SCS with M.

### 5) Δ (delta)

This parameter indicates an offset in addition to K2 for PUSCH scheduled by RAR (Random access response) or by fallback RAR. The value of this parameter may be a value obtained by multiplying the number of OFDM symbols in a case of 120 kHz SCS with M.

### 6) N_{PDSCH}

This parameter indicates PDSCH reception preparation time in a case of cross carrier scheduling with different SCSs. The value of this parameter may be a value obtained by multiplying the number of OFDM symbols in a case of 120 kHz SCS with M.

### 7) X

This parameter indicates the minimum time gap for wake-up and SCell dormancy indication by DCI format 2_6. The value of this parameter may be a value obtained by multiplying the number of OFDM symbols in a case of 120 kHz SCS with M.

According to the above-described operation 7), the parameters related to timelines adapted to the higher SCS can be used.

The following new UE capabilities and report signaling may be defined for each UE, FR, FC, or the like, as described in the following 1) to 6).

1) Whether or not to support the SCS greater than 960 kHz.
2) Whether or not to support one of or a plurality of SSB, PDCCH, PDSCH, PUSCH, PUCCH, and PRACH to which the SCS greater than 960 kHz is applied.
3) Whether or not to support (X_{S}, Y_{S}) indicating the monitoring capability for PDCCH to which the SCS greater than 960 kHz is applied.
4) The maximum number of monitoring PDCCH candidates M_{PDCCH}^{max,XS,µ} and the maximum number of non-overlapped CCEs in X_{S} slot groups of (X_{S}, Y_{S}) indicating the monitoring capability for PDCCH to which the SCS greater than 960 kHz is applied.
5) Whether or not to support single DCI for scheduling 16 or 32 or more than 8 PDSCHs/PUSCHs to which the SCS greater than 960 kHz is applied.
6) Whether or not to support the block-based granularity PDSCH and/or PUSCH scheduling.

It is to be noted that one or a plurality of the above-described 1) to 6) may be supported by the UE as a mandatory capability. For example, the UE capabilities supported by the UE as a mandatory capability is not required to be reported.

According to an embodiment of the present invention, the terminal 20 can apply the larger subcarrier spacing to physical channels or signals.

In other words, channels or signals to which a larger subcarrier spacing is applied can be transmitted and received in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

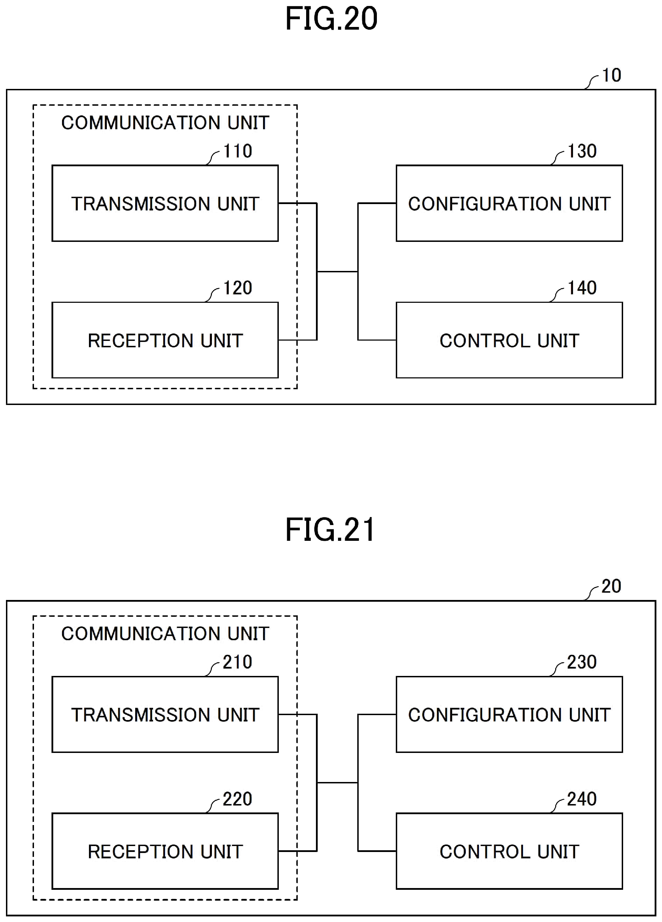

Fig. 20 is a drawing illustrating an example of a functional structure of a base station 10 according to an embodiment of the present invention. As shown in Fig. 20, the base station 10 includes a transmission unit 110, a reception unit 120, a configuration unit 130, and a control unit 140. The functional configuration illustrated in Fig. 20 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to communications to which a higher SCS is applied.

The control unit 140 performs control related to communications to which a higher SCS is applied as described in the embodiments. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 21 is a drawing illustrating an example of a functional structure of a terminal 20 according to an embodiment of the present invention. As shown in Fig. 21, the terminal 20 includes a transmission unit 210, a reception unit 220, a configuration unit 230, and a control unit 240. The functional configuration illustrated in Fig. 21 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to communications to which a higher SCS is applied.

The control unit 240 performs control related to communications to which a higher SCS is applied as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 20 and Fig. 21) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

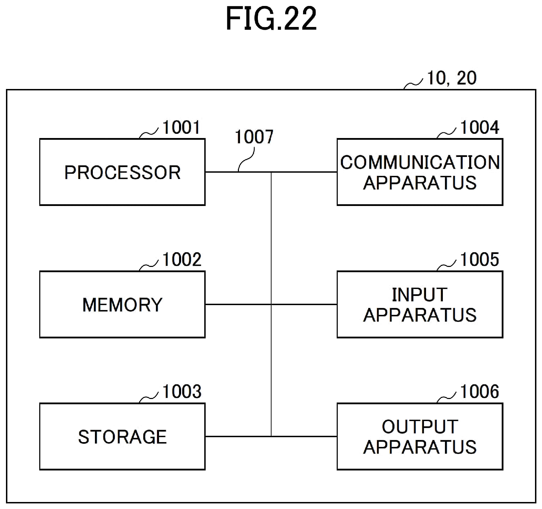

For example, the base station 10, the terminal 20, etc., according to an embodiment of the present disclosure may function as a computer for processing the radio communication method of the present disclosure. Fig. 22 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 20 may be implemented by control programs that are stored in the memory 1002 and that operate on the processor 1001. In addition, for example, the control unit 240 of the terminal 20 illustrated in Fig. 21 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

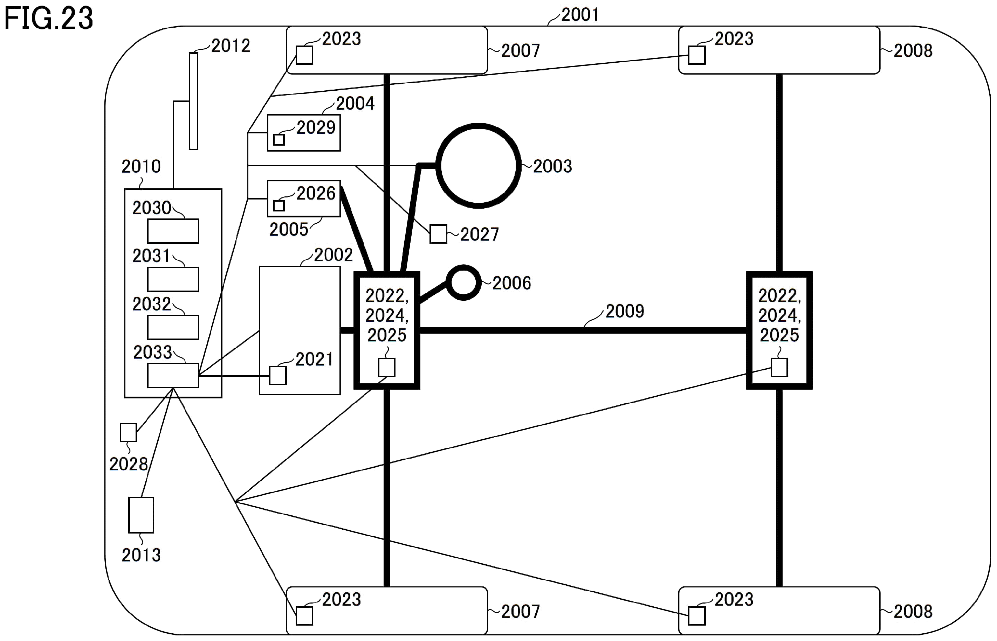

Fig. 23 shows an example of a configuration of a vehicle 2001. As shown in Fig. 23, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a control unit configured to expect that scheduling of a shared channel is to be performed by using a level of a block composed of a plurality of symbols or a plurality of slots in communications to which a subcarrier spacing greater than a certain frequency is applied; and a communication unit configured to receive the shared channel from a base station or transmit the shared channel to the base station in the communications.

According to the above-described configuration, the terminal 20 can apply the larger subcarrier spacing to physical channels or signals. In other words, channels or signals to which a larger subcarrier spacing is applied can be transmitted and received in the wireless communication system.

The control unit may determine the block based on the subcarrier spacing greater than the certain frequency and a predefined reference subcarrier spacing. According to the above-described configuration, the terminal 20 can apply the larger subcarrier spacing to physical channels or signals.

The control unit may perform uplink shared channel frequency hopping by using the level of the block. According to the above-described configuration, the terminal 20 can apply the larger subcarrier spacing to physical channels or signals.

The control unit may determine DMRS (Demodulation reference signal) positions by performing scheduling using granularity of the level of the block. According to the above-described configuration, the terminal 20 can apply the larger subcarrier spacing to physical channels or signals.

The control unit may allocate a single codeword including a single code block or a plurality of code blocks to a plurality of unit periods. According to the above-described configuration, the terminal 20 can apply the larger subcarrier spacing to physical channels or signals.

In addition, according to an embodiment of the present invention, a communication method performed by a terminal is provided. The communication method includes: expecting that scheduling of a shared channel is to be performed by using a level of a block composed of a plurality of symbols or a plurality of slots in communications to which a subcarrier spacing greater than a certain frequency is applied; and receiving the shared channel from a base station or transmitting the shared channel to the base station in the communications.

According to the above-described configuration, the terminal 20 can apply appropriate waveforms to the physical channel or signal depending on the communication environment. In other words, waveforms to be applied can be determined in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database, or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus

## Claims

1. A terminal comprising:
a control unit configured to expect that scheduling of a shared channel is to be performed by using a level of a block composed of a plurality of symbols or a plurality of slots in communications to which a subcarrier spacing greater than a certain frequency is applied; and
a communication unit configured to receive the shared channel from a base station or transmit the shared channel to the base station in the communications.

2. The terminal as claimed in claim 1, wherein
the control unit determines the block based on the subcarrier spacing greater than the certain frequency and a predefined reference subcarrier spacing.

3. The terminal as claimed in claim 1, wherein
the control unit performs uplink shared channel frequency hopping by using the level of the block.

4. The terminal as claimed in claim 1, wherein
the control unit determines DMRS (Demodulation reference signal) positions by performing scheduling using granularity of the level of the block.

5. The terminal as claimed in claim 1, wherein
the control unit allocates a single codeword including a single code block or a plurality of code blocks to a plurality of unit units.

6. A communication method performed by a terminal, the communication method comprising:
expecting that scheduling of a shared channel is to be performed by using a level of a block composed of a plurality of symbols or a plurality of slots in communications to which a subcarrier spacing greater than a certain frequency is applied; and
receiving the shared channel from a base station or transmitting the shared channel to the base station in the communications.
